# EUROPÄISCHE PATENTSCHRIFT

(11) **EP 1 391 644 B1**
(45) Veröffentlichungstag und Bekanntmachung des Hinweises auf die Patenterteilung: **19.10.2005**
(21) Anmeldenummer: 03018520.1
(22) Anmeldetag: 16.08.2003
(51) Int. Cl.: F16K 5/06

(54) **Kugelventil**
Ball valve
Soupape sphérique

(30) Priorität: 22.08.2002 DE 10238478
(43) Veröffentlichungstag der Anmeldung: 25.02.2004
(73) Patentinhaber: Pierburg GmbH, 41460 Neuss (DE)
(72) Erfinder: Nowak, Martin, 40476 Düsseldorf (DE); Lappan, Rolf, 50733 Köln (DE); Hunkel, Dirk, Dr., 52062 Aachen (DE); Haushälter, Peter, 41065 Mönchengladbach (DE)
(74) Vertreter: von Kirschbaum, Alexander

(56) Entgegenhaltungen:
- US-A- 3 345 032
- US-A- 3 656 711
- US-A- 4 236 691
- US-A- 4 940 208

## Beschreibung

Die Erfindung betrifft ein Kugelventil für Brennstoffaggregate, die insbesondere in Kraftfahrzeugen eingesetzt werden. Das erfindungsgemäße Kugelventil ist insbesondere für dünnflüssige Medien, insbesondere dünnflüssige Gase, d.h. Medien mit sehr kleinen Molekülen, geeignet.

Brennstoffaggregate für Kraftfahrzeuge weisen eine Brennstoffzelle auf, in der üblicherweise unter Einsatz von Wasserstoff und Sauerstoff elektrische Energie erzeugt wird. Ggf. ist der Brennstoffzelle ein Reformer vorgeschaltet. Mit Hilfe des Reformers kann aus herkömmlichen Kraftstoffen, wie Benzin, Diesel oder Methanol, Wasserstoff gewonnen werden, der sodann der Brennstoffzelle zugeführt wird. Durch das Vorschalten eines Reformers können Brennstoffaggregate in Kraftfahrzeugen eingesetzt werden, ohne dass eine flächendeckende Versorgung mit Wasserstoff gewährleistet sein muss. Zwischen dem Reformer und der Brennstoffzelle bzw. zwischen einem Wasserstofftank und der Brennstoffzelle sind im Allgemeinen regelbare Ventile erforderlich, um der Brennstoffzelle die entsprechenden Menge an Sauerstoff und Wasserstoff zuführen zu können.

Bei Brennstoffaggregaten ist es erforderlich, dass die verwendeten Ventile einen Strömungskanal o.dgl. äußerst dicht abschließen können. Dies ist beispielsweise bei dem Einsatz von Wasserstoff erforderlich, da bereits Wasserstoff-Luft-Gemische bei geringen Anteilen an Wasserstoff explodieren können. Sehr hohe Dichtigkeiten der Ventile sind ferner erforderlich, da es sich bei Wasserstoff um ein dünnflüssiges Gas, d.h. ein Gas mit sehr kleinen Molekülen, handelt.

Aus US 3,345,032 ist ein 3-Wege-Ventil mit einem kugelförmigen Schaltelement bekannt, wobei durch Betätigen des Schaltelementes ein Einlasskanal mit einem Auslasskanal verbunden oder eine Verbindung unterbrochen werden kann. Das 3-Wege-Ventil weist ein Dichtelement mit zwei Dichtlippen auf, die jeweils entlang einer Kreislinie das Schaltelement berühren.

Aufgabe der Erfindung ist es, ein Kugelventil für Brennstoffaggregate zu schaffen, mit dem eine hohe Dichtigkeit erzielt werden kann.

Die Lösung der Aufgabe erfolgt erfindungsgemäß durch die Merkmale des Anspruchs 1.

Das erfindungsgemäße Kugelventil weist mindestens einen Einlasskanal und mindestens einen Auslasskanal auf. Bei dem erfindungsgemäßen Ventil kann es sich um ein 2-2-Wege-Ventil oder ein 2-3-Wege-Ventil handeln. Zwischen dem Einlasskanal und dem Auslasskanal ist ein im Wesentlichen kugelförmiges Schaltelement angeordnet, wobei durch Drehen des Schaltelements beispielsweise der Einlasskanal mit dem Auslasskanal verbunden werden kann oder die Verbindung zwischen zwei Kanälen unterbrochen werden kann oder ein Umschalten auf zwei andere Kanälen vorgenommen werden kann. Des Weiteren liegt an dem Schaltelement mindestens ein Dichtelement an, um insbesondere in geschlossenem Zustand ein möglichst dichtes Abschließen des Kanals sicherzustellen. Ein beispielsweise mehrere Einlasskanäle aufweisendes Ventil weist üblicherweise je Einlasskanal ein Dichtelement auf. Das Dichtelement weist zwei Dichtlippen auf, die jeweils entlang einer Kreislinie an dem Schaltelement anliegen. Es handelt sich bei dem Dichtelement somit um eine sphärische Doppeldichtung. Auf Grund des Vorsehens von zwei Dichtlippen kann ein hoher Grad an Dichtigkeit erreicht werden.

Um ein sicheres Abdichten des erfindungsgemäßen Kugelventils in jedem Betriebszustand zu gewährleisten, d.h. beispielsweise auch in einem Zustand, in dem an der Dichtung kein oder nur ein geringer Druck anliegt, weist das Dichtelement erfindungsgemäß ein Fußteil, ein Kopfteil und ein das Fußteil mit dem Kopfteil verbindendes Stegteil auf, wobei mit dem Kopfteil erfindungsgemäß die Dichtlippen verbunden sind. Hierbei ist das Fußteil vorzugsweise in dem Gehäuse angeordnet und dient insbesondere zum Halten bzw. Definieren der Lage des Dichtelements in dem Gehäuse. Das Stegteil, das gegenüber dem Fußteil und dem Kopfteil verjüngt ist, stellt eine elastische Verbindung zwischen dem Kopfteil und dem Fußteil dar. Auf Grund dieser Elastizität können die Einbaumaße derart gewählt werden, dass der Stegteil in eingebautem Zustand elastisch verformt ist und die Dichtlippen somit stets mit einer vordefinierten Kraft gegen das Schaltelement drücken. Vorzugsweise ist das Fußteil, das Kopfteil und/oder das Stegteil ringförmig.

Das erfindungsgemäße zweilippige Dichtelement hat gegenüber herkömmlichen Dichtelementen, wie beispielsweise Dichtringen aus PTFE, den Vorteil, dass bei derartigen Dichtringen eine hohe Vorspannkraft erforderlich ist, um ein sicheres Abdichten, insbesondere bei dünnflüssigen Medien, zu gewährleisten. Dies hat ferner auch eine hohe Verstellkraft zur Folge.

Vorzugsweise ist zwischen den beiden Dichtlippen eine ringförmige Ausnehmung vorgesehen, die in Richtung des Schaltelements offen ist. Die beiden Dichtlippen verlaufen hierbei vorzugsweise parallel zueinander. Das Vorsehen einer ringförmigen Ausnehmung zwischen den zwei Dichtlippen hat den Vorteil, dass die Dichtlippen an das Schaltelement angedrückt werden können. Hierbei kann sich der Abstand der beiden Dichtlippen zueinander geringfügig verändern, insbesondere vergrößern. Auf Grund der erhöhten Andrückkraft wird die Dichtigkeit des Dichtelements weiter verbessert.

Mindestens eine der zwei Dichtlippen weist eine Andrückfläche auf, die vorzugsweise in Richtung eines Kanals, insbesondere eines Einlasskanals, weist, so dass an der Andrückfläche anstehender Druck die Anpresskraft der Dichtlippe an das Schaltelement erhöht und so die Dichtwirkung weiter verbessert.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines erfindungsgemäßen Kugelventils und
- Fig. 2: eine schematische Vergrößerung des Bereichs II in Fig. 1.

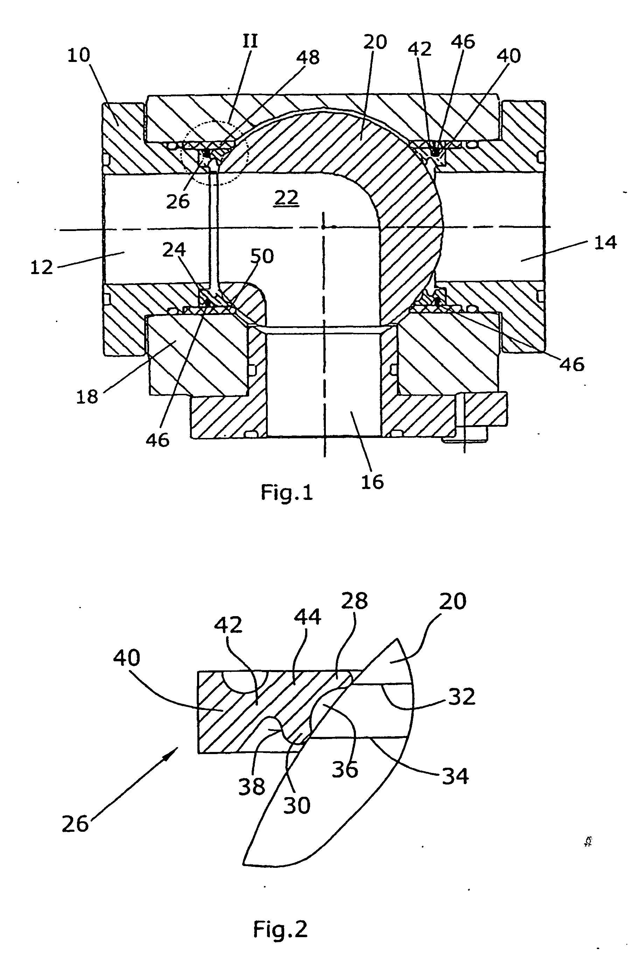

In einem Gehäuse 18 ist ein Auslasskanal 12, ein Auslasskanal 14 und ein Einlasskanal 16 vorgesehen. Der Einlasskanal 16 ist über ein Zwischenteil oder eine Hülse 10 mit dem Gehäuse 18 verbunden. Innerhalb des Gehäuses 18 ist ein im Wesentlichen kugelförmiges Schaltelement 20 angeordnet. In dem in Fig. 1 dargestellten Zustand strömt ein Medium durch den Einlasskanal 16, durch einen Kanal 22 des Schaltelementes 20 in den Auslasskanal 12.

Zum Abdichten der Auslasskanäle 12,14 gegenüber dem Schaltelement 20 sind ringförmig Dichtelemente 24 bzw. 26 vorgesehen. Die Dichtelemente 24,26, die vorzugsweise aus einem elastomeren Kunststoff hergestellt sind, weisen zwei ringförmige Dichtlippen 28,30 (Fig. 2) auf, die jeweils entlang einer Kreislinie 32 bzw. 34 an dem kugelförmigen Schaltelement 20 anliegen. Durch die beiden im Wesentlichen zueinander parallel verlaufenden Dichtlippen 28,30 ist eine Doppeldichtung realisiert. Hierdurch ist eine geringe Leckage gewährleistet.

Zwischen den beiden Dichtlippen 28,30 ist eine ringförmige Ausnehmung 36 vorgesehen, die im dargestellten Ausführungsbeispiel konkav ausgebildet ist. Hierdurch ist die Elastizität und Beweglichkeit der Dichtlippen 28,30 erhöht. Ferner können die Dichtlippen 28,30 beim Auftreten erhöhter Kräfte auseinandergedrückt werden und hierbei eine höhere Dichtwirkung erzielen. Die beiden Dichtlippen 28,30 weisen hierbei zu dem kugelförmigen Schaltelement 20 einen derartigen Winkel auf, dass die beiden Dichtlippen 28,30 beim Erhöhen der Andrückkraft auseinandergedrückt werden.

Im dargestellten Ausführungsbeispiel ist der Auslasskanal 14 verschlossen, so dass an einem Teil des Dichtelements 26 sowie 24 ein erhöhter Druck anliegt. Dies führt dazu, dass die innere Dichtlippe 30 gegen das Schaltelement gedrückt wird. Hierzu weist die Dichtlippe 30 zur Erhöhung der Dichtigkeit eine Andrückfläche 38 auf, die in Richtung des Einlasskanals 16 weist.

Um eine Vorspannung, d.h. ein sicheres Andrücken der Dichtlippen 28,30 in jedem Zustand zu gewährleisten, weist das Dichtelement 24,26 ein Fußteil 40, ein Stegteil 42 und ein Kopfteil 44 auf. Das Stegteil 42, das gegenüber dem Fußteil 40 sowie gegenüber dem Kopfteil 44 einem erheblich geringeren Querschnitt aufweist, ist elastisch ausgebildet. Hierdurch kann eine gute Kraftübertragung und damit eine Vorspannung der Dichtlippen 28,30 erzielt werden. Die Ausgestaltung des Dichtelements 24,26 durch ein ringförmiges Fußteil 40, ein ringförmiges Kopfteil 44 und einen ringförmigen Steg 42 bewirkt, dass das Dichtelement 24,26 als weiche Feder wirkt. Durch diese relativ leichte aber dichte Anpressung der Dichtlippen 28,30 an das Schaltelement 20 ist eine geringe Reibkraft bezogen auf die Drehachse und damit ein geringes Drehmoment zum Verstellen des Schaltelements 20 erforderlich.

Des Weiteren ist in dem Gehäuse 18 zur Halterung bzw. zur Lagefixierung des Dichtelements 24,26 jeweils ein Klemmring 46 vorgesehen, der zwischen Kopfteil 40 und Fußteil 44 angeordnet ist.

Des Weiteren ist ein Anschlagelement oder Anschlagring 48 bzw. 50 vorgesehen. Durch den Anschlagring 48,50, der ebenfalls innerhalb des Gehäuses 18 angeordnet ist, wird die maximale Verschiebbarkeit des Schaltelements 20 in axialer Richtung begrenzt.

Besonders bevorzugt ist es, den Klemmring 46 zusammen mit dem Dichtelement 24 bzw. 26 und/oder zusammen mit dem Anschlagelement 50 einstückig auszubilden. Eine weitere bevorzugte Variante besteht darin, dass das Dichtelement 24 bzw. 26 mit dem Klemmring 46 einstückig aus einem relativ weichen Elastomerkunststoff auszubilden und das Anschlagelement bzw. den Anschlagring aus einem reibarmen Kunststoff, wie beispielsweise aus PTFE, herzustellen ist.

Die Montage der Dichtelemente 24,26, der Klemmringe 46 sowie der Anschlagelement 48,50 erfolgt vor dem Einschrauben der Hülse 10 bzw. eines gegenüberliegenden Hülse.

## Patentansprüche

1. Kugelventil für Brennstoffaggregate, mit
mindestens einem Auslasskanal (12,14),
mindestens einem Einlasskanal (16),
einem zwischen dem Einlasskanal (16) und dem Auslasskanal (12,14) angeordneten im Wesentlichen kugelförmigen Schaltelement (20), wobei durch Betätigen des Schaltelements (20) der Einlasskanal (16) mit dem Auslasskanal (12,14) verbunden oder eine Verbindung unterbrochen werden kann, und
einem an dem Schaltelement (20) anliegenden Dichtelement (24,26), das zwei Dichtlippen (28,30) aufweist, die jeweils entlang einer Kreislinie (32,34) das Schaltelement (20) berühren,
**dadurch gekennzeichnet, dass**
das Dichtelement (24,26) ein Fußteil (40) zur Anordnung in einem Gehäuse (18), ein die zwei Dichtlippen (28,30) aufweisendes Kopfteil (44) und ein das Fußteil (40) mit dem Kopfteil (44) verbindendes elastisches Stegteil (42) aufweist.

2. Kugelventil nach Anspruch 1, **dadurch gekennzeichnet, dass** zwischen den beiden Dichtlippen (28,30) eine ringförmige Ausnehmung (36) vorgesehen ist, die in Richtung des Schaltelements (20) offen ist.

3. Kugelventil nach Anspruch 1 oder 2, **dadurch gekennzeichnet, dass** zumindest eine Dichtlippe (30) eine Andrückfläche (38) aufweist, so dass bei anstehendem Druck die Dichtwirkung verbessert wird.

4. Kugelventil nach einem der Ansprüche 1 - 3, **gekennzeichnet durch** ein Anschlagelement (48,50) zur Begrenzung der axialen Verschiebbarkeit des Schaltelements (20).

5. Kugelventil nach einem der Ansprüche 1 - 4, **gekennzeichnet durch** einen Klemmring (56) zur Lagefixierung des Dichtelementes (24,26) in dem Gehäuse (18).

6. Kugelventil nach einem der Ansprüche 1 - 5, **dadurch gekennzeichnet, dass** der Klemmring (46) und/oder das Dichtelement (26) und/oder das Anschlagelement (28,50) einstückig ausgebildet sind.

## Claims

1. A ball valve for fuel aggregates, comprising
at least one outlet channel (12, 14),
at least one inlet channel (16),
a substantially spherical switching element (20) arranged between the inlet channel (16) and the outlet channel (12, 14), the inlet channel (16) being able to be connected with the outlet channel (12,14) or a connection being able to be interrupted by actuating the switching element (20), and
a sealing element (24, 26) contacting the switching element (20), the sealing element comprises two sealing lips (28, 30) each of which contacts the switching element (20) along a circular line (32, 34),
**characterized in that**
the sealing element (24, 26) comprises a foot part (40) for being arranged in a housing (18), a head part (44) comprising the two sealing lips (28, 30), and an elastic web part (42) connecting the foot part (40) with the head part (44).

2. The ball valve according to claim 1, **characterized in that** an annular recess (36) open toward the switching element (20) is provided between the two sealing lips (28, 30).

3. The ball valve according to claim 1 or 2, **characterized in that** at least one sealing lip (30) has a pressing surface (38) so that the sealing effect is improved when pressure appears.

4. The ball valve according to one of claims 1-3, **characterized by** a stop element (48, 50) for restricting the axial displaceability of the switching element (20).

5. The ball valve according to one of claims 1-4, **characterized by** a clamping ring (56) for fixing the position of the sealing element (24, 26) in the housing (18).

6. The ball valve according to one of claims 1-5, **characterized in that** the clamping ring (46) and/or the sealing element (26) and/or the stop element (28, 50) are integrally formed.

## Revendications

1. Soupape sphérique pour groupes à combustible, comprenant
au moins un conduit d'échappement (12, 14),
au moins un conduit d'admission (16),
un élément de commutation (20) essentiellement sphérique disposé entre le conduit d'admission (16) et le conduit d'échappement (12, 14), le conduit d'admission (16) pouvant être relié au conduit d'échappement (12, 14) ou une liaison pouvant être coupée par actionnement de l'élément de commutation (20), et
un élément d'étanchéité (24, 26) s'appliquant sur l'élément de commutation (20), qui présente deux lèvres d'étanchéité (28, 30) qui sont chacune au contact de l'élément de commutation (20) le long d'un cercle (32, 34),
**caractérisée en ce que**
l'élément d'étanchéité (24, 26) présente une partie de base (40) pour l'agencement dans un corps (18), une partie de tête (44) comportant les deux lèvres d'étanchéité (28, 30) et une partie d'entretoise élastique (42) reliant la partie de base (40) à la partie de tête (44).

2. Soupape sphérique suivant la revendication 1, **caractérisée en ce qu'**entre les deux lèvres d'étanchéité (28, 30) est prévu un creux annulaire (36) qui est ouvert en direction de l'élément de commutation (20).

3. Soupape sphérique suivant l'une des revendications 1 et 2, **caractérisée en ce qu'**au moins une lèvre d'étanchéité (30) présente une surface de pression (38), de sorte que l'effet d'étanchéité est amélioré en présence d'une pression.

4. Soupape sphérique suivant l'une des revendications 1 à 3, **caractérisée par** un élément de butée (48, 50) pour limiter la possibilité de déplacement axial de l'élément de commutation (20).

5. Soupape sphérique suivant l'une des revendications 1 à 4, **caractérisée par** une bague de serrage (56) pour la fixation en position de l'élément d'étanchéité (24, 26) dans le corps (18).

6. Soupape sphérique suivant l'une des revendications 1 à 5, **caractérisée en ce que** la bague de serrage (46) et/ou l'élément d'étanchéité (26) et/ou l'élément de butée (28, 50) sont réalisés d'une seule pièce.
